# EUROPEAN PATENT SPECIFICATION

(11) **EP 1 511 649 B1**
(45) Date of publication and mention of the grant of the patent: **12.03.2008**
(21) Application number: 03738799.0
(22) Date of filing: 27.05.2003
(51) Int. Cl.: B60K 35/00, G01D 13/20

(54) **DEVICE FOR INDICATING AN OPERATIONAL STATE OF A VEHICLE**
VORRICHTUNG ZUR ANZEIGE DES BETRIEBSZUSTANDS EINES FAHRZEUGS
DISPOSITIF D'INDICATION

(30) Priority: 27.05.2002 SE 0201571
(43) Date of publication of application: 09.03.2005
(73) Proprietor: VOLVO TECHNOLOGY CORPORATION, 405 08 Göteborg (SE)
(72) Inventor: HEYDEN, Pär, S-442 98 Kode (SE); JARLENGRIP, Johan, S-416 66 Göteborg (SE)
(74) Representative: Fröhling, Werner Otto
(86) International application number: PCT/SE2003/000873
(87) International publication number: WO 2003/099602

(56) References cited:
- EP-A1- 0 939 301
- WO-A1-01/23205
- DE-A1- 19 807 483
- US-A- 4 935 850

## Description

### TECHNICAL FIELD:

The present invention relates to a device for indicating an operational state of a vehicle, according to the preamble to the following patent claim 1.

### BACKGROUND ART:

In connection with motor vehicles, there is a need for the driver to be able to read off various operational states of the vehicle. According to known technology, motor vehicles are equipped for this purpose with some type of instrument to enable the driver to read off visually the said operational state, for example the speed of the vehicle. One type of commonly occurring instrument is a speedometer which shows the speed at which the vehicle is travelling, for example in kilometres per hour. Another type of commonly occurring instrument is a tachometer, which shows the engine speed (engine revolutions) of a driving motor arranged in the vehicle.

In the present-day driver environment with a lot of information, it is important for the driver to be able to comprehend the given information in as short a time as possible. This is of particular importance in stressful driving situations, when the driver needs to have his attention directed towards the surrounding traffic. It can sometimes be difficult for the driver to read off quickly and comprehend the value that, for example, is shown by the speedometer, and in an attempt to make this easier for the driver, a plurality of solutions has been developed where the scale of the speedometer is illuminated in different ways.

In patent document DE 19606245, an analogue speedometer is already known in which both the scale and the pointer are illuminated by separately controllable light sources arranged behind the scale. More specifically, these light sources are arranged between the markings on the scale, and for driving in the dark all the light sources can be illuminated in order to create a contrast to the scale marks that are not illuminated. A disadvantage of the arrangement according to DE 19606245 is that the time it takes for the driver to read off the displayed speed is relatively long. Another disadvantage is that the driver must lower his gaze in order to obtain a correct reading off of the speed. It is true that the driver can be guided by the illuminated pointer where to direct his gaze, but this guidance is insufficient for the driver to be able to keep his attention directed towards the current driving situation at the same time.

Another analogue speedometer is already known though patent document DE 19540813, which discloses the features of the preamble of claim 1 and in which the scale and the numerals are illuminated by a light source that is arranged behind the face of the speedometer. Between the light source and the face is a light valve arranged to enable the intensity of the illumination perceived by the driver to be varied. A disadvantage of the arrangement according to DE 19540813 is that this solution also does not enable the driver to read off a correct value without lowering his gaze and thereby directing his attention away from the current driving situation. The fact that the intensity of the illumination can be varied, does not mean in itself that the driver's gaze obtains sufficient guidance in order to be able to make a correct reading quickly.

### DISCLOSURE OF INVENTION:

A principal object of the present invention is to provide a device for indicating an operational state of a vehicle that permits a reduced passage of time for transmitting the information concerned, for example the speed of the vehicle, while retaining the precision, whereby the driver is able to keep his attention directed towards the current driving situation to a greater extent. This object is achieved by means of a device, the characterizing features of which are apparent from the following Claim 1.

The invention consists of a device for indicating an operational state of a vehicle and comprises a display unit that shows graphical information in the form of an arc-shaped scale, with the arc-shaped scale comprising a number of numerals corresponding to the value of the operational state and with the device comprising an arc-shaped field with an extent from a first angle ϕ₁ to a second angle ϕ₂ and with an outer delimiting line that extends along the inside of the arc-shaped scale. The invention is characterized in that the arc-shaped field is divided into a first segment A which extends from the said first angle ϕ₁ to a third variable angle ϕ and a second segment B which extends from the said third variable angle ϕ to the said second angle ϕ₂, where the third variable angle ϕ corresponds to the relevant operational state of the vehicle and where ϕ₁ ≤ ϕ ≤ ϕ₂, where the first segment A is arranged to assume a state that is visually distinguishable from the second area B.

A plurality of advantages is obtained by means of the invention. Primarily, it can be noted that with a device according to the invention, a device is achieved for indicating an operational state in a vehicle that enables a correct reading off of the displayed operating state to be carried out by the driver in the driver's peripheral vision, as the driver can easily perceive the extent of the arc-shaped field. This means that the driver does not need to lower his gaze and the driver can therefore keep his attention directed towards the current driving situation.

As the area A is illuminated and the intensity of the light is varied in the area from a least to a greatest value at the angle ϕ, corresponding to the current value of the vehicle's operational state, a quick and correct reading off of the device is made possible, even in reduced lighting conditions.

The fact that the graphical information of the display unit is arranged to assume a modified state in comparison with the normal representation in the area around the angle ϕ, makes a correct and quick reading off even easier.

In addition, a precise reading off of the vehicle's operational state is made possible by the resolution of the arc-shaped scale being higher in the area around the angle ϕ.

Due to the arc-shaped scale being arranged to assume a first state which is visually distinguishable from the second illuminated state, and due to the said second state being assumed by the scale in the area around ϕ, the driver's gaze is directed towards the illuminated area of the arc-shaped scale, which makes a precise reading off even easier.

Further advantageous embodiments of the invention are described in the following dependent patent claims.

### DESCRIPTION OF DRAWINGS:

The invention will be described in greater detail in the following, with reference to a preferred embodiment and the attached drawings, in which:
- Figure 1: shows schematically a vehicle with a display unit arranged in the instrument panel,
- Figure 2: shows schematically how a device according to the invention can be arranged in an instrument panel,
- Figure 3: is a view directly from the front, that shows a preferred embodiment of the invention in the form of a speedometer,
- Figure 4: is a view directly from the front of a further embodiment of the invention, more specifically a tachometer.

### MODES FOR CARRYING OUT THE INVENTION:

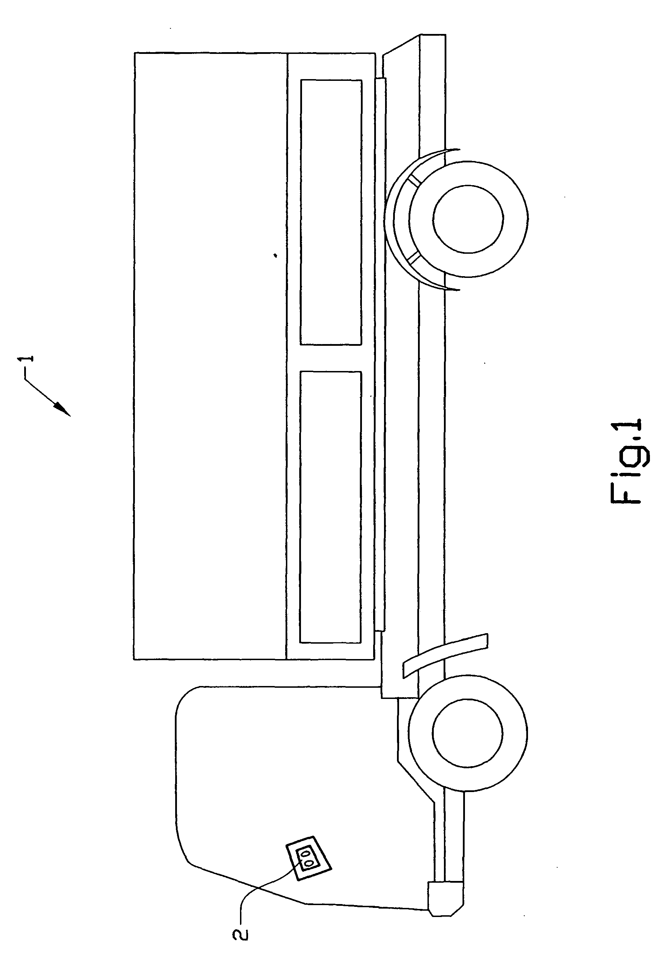

Figure 1 shows a side view of a vehicle 1 in which the invention is utilized. The vehicle 1 contains an instrument with a display unit 2, arranged in front of the driver in the immediate vicinity of the driver.

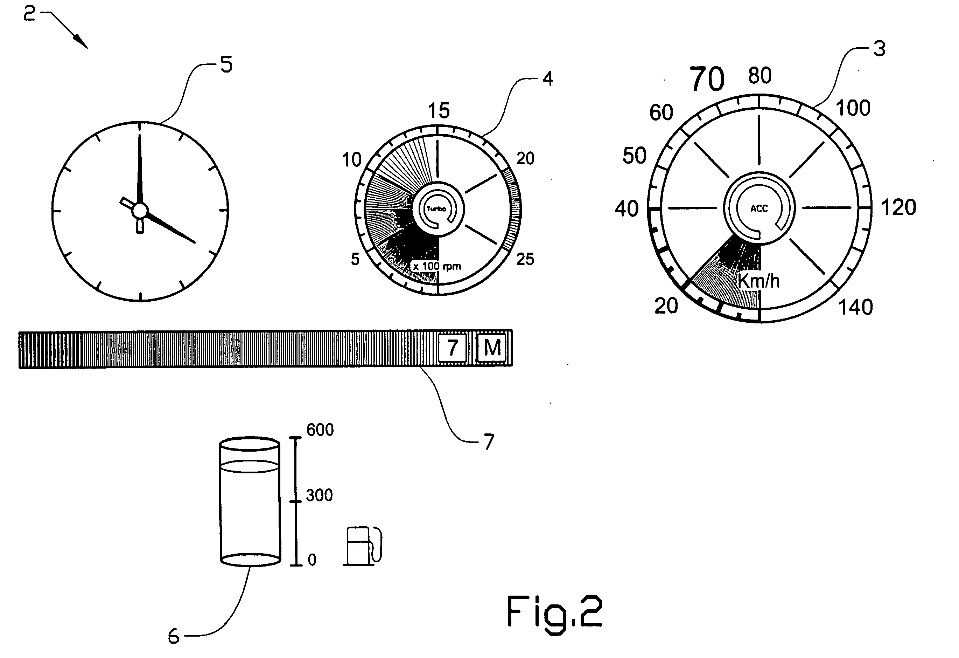

Figure 2 shows schematically how a device according to the invention can be arranged on a display unit 2. The figure shows how two different embodiments of the invention are arranged on the display unit 2 in the form of a speedometer 3 and a tachometer 4. The display unit 2 has, in addition, a number of different instruments, such as indicators for the time 5, fuel level 6 and gear indicator 7, etc.

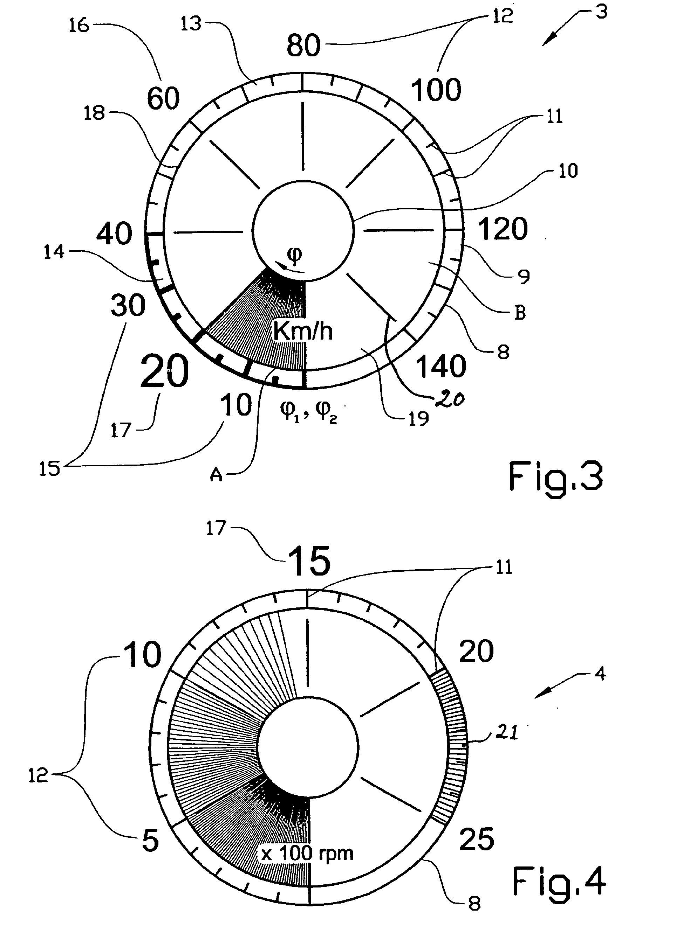

Figure 3 shows a view directly from the front of a speedometer 3 arranged to indicate the speed of a vehicle 1, where the speed is displayed in kilometres per hour (km/h).

The speedometer 3 is comprised in a display unit 2. The speedometer 3 has an arc-shaped scale 8 delimited by a first outer circle 9 and a second inner circle 18. Inside the arc-shaped scale 8 is arranged a third smaller circle 10, with a common centre with the said first and second circles 9, 18. Lines 11 are arranged evenly along the arc-shaped scale 8, with certain lines that, for example, represent whole tens of km/h, extending from circle 9 to circle 18, while other lines that, for example, represent intermediate five km/h intervals, can be made shorter. Certain lines 20 that, for example, represent twenty km/h intervals can also extend into the area between circle 9 and circle 10. At each line 11 that represents an even 20 km/h interval, 20, 40, 60 80, etc, km/h, a numeral 12 corresponding to the respective speed is arranged along the outside of the arc-shaped scale 8. The arc-shaped scale 8 is arranged to assume a first non-illuminated state 13 and a second illuminated state 14, with the said second illuminated state 14 being assumed in the area around the relevant speed, in Figure 3 in the area around 20 km/h. The area of the arc-shaped scale 8 that assumes an illuminated state can be freely selected, but is preferably not too large. Experiments have shown that, for example, ± 20 km/h is a suitable range. It is advantageous if the illuminated area is symmetrical where possible. Alternatively, the whole area around the relevant speed is not illuminated, but only the edge of the area, that is the part of the circle 9 that lies in the vicinity of the relevant speed.

The speedometer 3 is also arranged to show the speed with a higher resolution in the area around the relevant speed, which means that numerals 15 representing tens of km/h that were previously invisible to the driver become visible in the area around the relevant speed. In order to increase the legibility still further, each numeral 12, 15 is arranged to be able to assume a first normal format 16 and a second larger format 17, with the said second larger format 17 being assumed in the area around the relevant speed. The numeral or numerals 12, 15 that lie closest to the relevant speed advantageously assume the second larger format 17.

An arc-shaped field 19 is arranged inside the arc-shaped scale 8, between circle 18 and circle 10. The arc-shaped field 19 extends from a first angle ϕ₁ to a second angle ϕ₂. Thus, in the embodiment shown, ϕ₁ is 0 degrees and ϕ₂ is 360 degrees. Other angular ranges are also possible, for example from 0 degrees to 270 degrees. The arc-shaped field 19 is divided into a first segment A and a second segment B, with the first segment A running between the said first angle ϕ₁ and a third variable angle ϕ that corresponds to the relevant speed of the vehicle. Segment B runs between the said third variable angle ϕ and the said second angle ϕ₂, where ϕ₁ ≤ ϕ ≤ ϕ₂. Segment A is arranged to assume an illuminated state which is visually distinguishable from the second segment B. The light intensity in the illuminated segment A can advantageously vary from a lowest value at the angle ϕ₁ to a highest value at the angle ϕ. The purpose of this is to create as large a contrast as possible at the transition between segment A and segment B. By letting the light intensity in segment A vary, a clear indication is obtained of the transition between segment A and segment B, while at the same time segment A is not illuminated to such an extent that the light disturbs the driver, which can happen if the whole of segment A is allowed to be illuminated.

The speedometer 3 in Figure 3 indicates that a vehicle is being driven at a speed of 20 km/h. The relevant speed is displayed by the arc-shaped segment A being illuminated, with the light intensity in the segment A varying from a lowest value at the angle ϕ₁ to a highest value at the angle ϕ, which corresponds to the relevant speed. In order to make it easier for the driver to read off the speedometer 3, the arc-shaped scale 8 is illuminated in the area around the relevant speed. The area shown here is illuminated between 0 km/h and 40 km/h. This illumination of the area can advantageously be varied smoothly. At the same time, the resolution of the display of the speed is made higher in the area around the relevant speed, so that the numerals for 10 km/h and 30 km/h are also displayed. At the same time, numerals that indicate the relevant speed are displayed in an enlarged illuminated format, here 20 km/h. The transition between the states described here for the numerals is advantageously carried out smoothly or in a plurality of increments.

In the example described here, the background of the speedometer is dark, that is segment B is dark and segment A is illuminated. The most important factor for enabling the driver to perceive the information on the speedometer is that the contrast is high. This is ensured by segment A having a high light intensity at the transition to segment B, that is at the relevant speed. When a speedometer has a light background, segment A is arranged to be a dark segment which is darkest at the relevant speed and becomes lighter towards the angle ϕ₁.

Figure 4 shows an additional embodiment of the invention in the form of a tachometer 4 for indicating the engine speed (revolutions) of the vehicle's motor. The tachometer 4 is principally arranged in a corresponding way to that described above. Numerals 12 are arranged around the outside of the arc-shaped scale 8, which numerals show the engine speed in increments of 500 revs per minute (rpm). As the relevant engine speed that is shown in Figure 4 is 1420 rpm, the numerals closest to the relevant engine speed are displayed in the larger format 17. Here the numeral "15" indicates 1500 rpm. At the same time, the next numerals on each side, here the numerals "10" and "20" are displayed with a higher light intensity. The arc-shaped scale 8 also shows a "high rpm" warning area 21.

In a first further development of the device according to the invention, segment A can also change colour. When the device is a speedometer, for example, the segment can change colour at certain speeds. The driver can then see his approximate speed out of the corner of his eye, without needing to take his gaze from the road. For example, segment A could be white up to 50 km/h, green between 50 and 70 km/h, orange between 70 and 90 km/h and red above 90 km/h. Alternatively, segment A could change colour from green to red when the current speed limit is exceeded, if the vehicle is equipped with receiving equipment for speed limits, so-called ISA (Intelligent Speed Adaptation) or if a navigation system is provided with speed limits. When the device is a tachometer, segment A can change colour when the engine speed is too high and/or when the vehicle is being driven at an economical engine speed. For a pressure sensor, segment A can, for example, be red when the pressure is too low and too high, and green when the pressure is within the tolerance range.

In another further embodiment of the device according to the invention, the arc-shaped field 19 can be given an inner delimiting line in the form of a circle with a centre that is displaced in relation to the centre of the arc-shaped scale 8 that constitutes the field's outer delimiting line.

In a third further development of the device according to the invention, the device including the arc-shaped scale 8 can have a different shape to the circular shape that has been described above. For example, a more or less oval or elliptical shape can be used. In this further development, one cusp of the oval can also follow the relevant displayed value.

The invention is preferably arranged in the vehicle's instrument panel and other types of instruments for monitoring and operating the vehicle are also suitably arranged on the display unit.

The invention is not limited to the embodiments described above and shown in the drawings, but can be varied freely within the framework of the following patent claims. For example, other operating states than those mentioned above, such as engine temperature and fuel level, can be displayed with a device according to the invention.

## Claims

1. Device (3; 4) for indicating an operational state of a vehicle (1) comprising a display unit (2), with the device (3; 4) showing graphical information on the display unit in the form of an arc-shaped scale (8) and a number of numerals (12; 15) corresponding to the value of the operational state, and with the device (3; 4) comprising an arc-shaped field (19) with an extent from a first angle ϕ₁ to a second angle ϕ₂ and with an outer delimiting line (18) that extends along the inside of the arc-shaped scale (8),
**characterized**
**in that** the arc-shaped field (19) is divided into a first segment (A) which extends from the said first angle ϕ₁ to a third variable angle ϕ and a second segment (B) which extends from the said third variable angle ϕ to the said second angle ϕ₂, where the third variable angle ϕ corresponds to the relevant operational state of the vehicle and where ϕ₁ ≤ ϕ ≤ ϕ₂, where the first segment (A) is arranged to assume a state that is visually distinguishable from the second area (B) and in that the graphical information of the device (3; 4) is arranged to assume a modified state in an area around ϕ, in comparison with the normal representation.

2. Device according to Claim 1, **characterized in that** the light intensity in the segment (A) varies smoothly or in several increments from a first value at the angle ϕ₁ to a second value at the angle ϕ.

3. Device according to Claim 2, **characterized in that** the light intensity in the segment (A) varies from a lowest value at the angle ϕ₁ to a highest value at the angle ϕ.

4. Device according to Claim 3, **characterized in that** the resolution of the display of the numeric values is higher in the area around the angle ϕ.

5. Device according to Claim 3 or 4, **characterized in that** the arc-shaped scale (8) is arranged to assume a first state (13) which is visually distinguishable from a second state (14), and that the said second state (14) is assumed by the scale in the area around ϕ.

6. Device according to any one of Claims 3 to 5, **characterized in that** each numeral (12; 15) representing an operational state of the vehicle (1) is arranged to assume a first normal format (16) and a second larger format (17), the said second larger format (17) being assumed in the area around the angle ϕ.

7. Device according to any one of the preceding claims, **characterized in that** the segment (A) can vary in colour and/or intensity at different operational states.

8. Device according to any one of the preceding claims, **characterized in that** the device is oval or elliptical.

9. Device according to any one of the preceding claims, **characterized in that** the said operational state is one or more of the following: vehicle speed, engine speed, distance, time, fuel level, pressure, voltage or current.

## Patentansprüche

1. Vorrichtung (3; 4) zur Anzeige eines Betriebszustands eines Fahrzeugs (1), das eine Anzeigeeinheit (2) aufweist, wobei die Vorrichtung (3; 4)
- graphische Informationen auf der Anzeigeeinheit in Form einer bogenförmigen Skala (8) und eine Anzahl von Zahlen (12, 15) anzeigt, die dem Wert des Betriebszustands entsprechen, und
- ein bogenförmiges Feld (19) mit einer Erstreckung von einem ersten Winkel ϕ₁ zu einem zweiten Winkel ϕ₂ und mit einer äußeren Begrenzungslinie (18) aufweist, die sich längs der Innenseite der bogenförmigen Skala (8) erstreckt,
**dadurch gekennzeichnet,**
- **dass** das bogenförmige Feld (19) in ein erstes Segment (A), das sich von dem ersten Winkel ϕ₁ zu einem dritten variablen Winkel ϕ erstreckt, und ein zweites Segment (B) aufweist, das sich von dem dritten variablen Winkel ϕ zu dem zweiten Winkel ϕ₂ erstreckt,
- wobei der dritte variable Winkel ϕ dem relevanten Betriebszustand des Fahrzeugs entspricht,
- wobei ϕ₁ ≤ ϕ ≤ ϕ₂ ist und
- wobei das erste Segment (A) so angeordnet ist, dass es einen Zustand annimmt, der visuell von dem zweiten Segment (B) unterscheidbar ist, und
- **dass** die graphischen Informationen der Vorrichtung (3; 4) so angeordnet sind, dass sie in einem Bereich um ϕ im Vergleich zu der normalen Darstellung einen modifizierten Zustand annehmen.

2. Vorrichtung nach Anspruch 1, **dadurch gekennzeichnet, dass** sich die Lichtstärke in dem Segment (A) glatt oder in mehreren Schritten von einem ersten Wert bei dem Winkel ϕ₁ bis zu einem zweiten Wert bei dem Winkel ϕ ändert.

3. Vorrichtung nach Anspruch 2, **dadurch gekennzeichnet, dass** sich die Lichtstärke in dem Segment (A) von einem niedrigsten Wert beim Winkel ϕ₁ bis zu einem höchsten Wert beim Winkel ϕ ändert.

4. Vorrichtung nach Anspruch 3, **dadurch gekennzeichnet, dass** die Auflösung der Anzeige der numerischen Werte in dem Bereich um den Winkel ϕ größer ist.

5. Vorrichtung nach Anspruch 3 oder 4, **dadurch gekennzeichnet, dass** die bogenförmige Skala (8) angeordnet ist, um einen ersten Zustand (13) anzunehmen, der visuell von einem zweiten Zustand (14) unterscheidbar ist, und dass der zweite Zustand (14) von der Skala in dem Bereich um ϕ angenommen wird.

6. Vorrichtung nach einem der Ansprüche 3 bis 5, **dadurch gekennzeichnet, dass** jede Zahl (12; 15), die einen Betriebszustand des Fahrzeugs (1) wiedergibt, so angeordnet ist, dass sie ein erstes normales Format (16) und ein zweites größeres Format (17) annimmt, wobei das zweite größere Format (17) in dem Bereich um den Winkel ϕ angenommen wird.

7. Vorrichtung nach einem der vorhergehenden Ansprüche, **dadurch gekennzeichnet, dass** das Segment (A) sich in der Farbe und/oder in der Stärke bei verschiedenen Betriebszuständen ändern kann.

8. Vorrichtung nach einem der vorhergehenden Ansprüche, **dadurch gekennzeichnet, dass** sie oval oder elliptisch ist.

9. Vorrichtung nach einem der vorhergehenden Ansprüche, **dadurch gekennzeichnet, dass** der Betriebszustand einer oder mehrere der folgenden ist: Fahrzeuggeschwindigkeit, Motordrehzahl, Entfernung, Zeit , Kraftstoffpegel, Druck, Spannung oder Strom.

## Revendications

1. Dispositif (3 ; 4) pour indiquer un état fonctionnel d'un véhicule (1) comportant une unité d'affichage (2), le dispositif (3 ; 4) représentant des informations graphiques sur l'unité d'affichage sous la forme d'une échelle en forme d'arc (8) et de nombreux nombres (12 ; 15) correspondant à la valeur de l'état fonctionnel, et le dispositif (3 ; 4) comportant en champ en forme d'arc (19) ayant une étendue allant d'un premier angle ϕ₁ à un deuxième angle ϕ₂ et ayant une ligne de délimitation extérieure (18) qui s'étend le long de l'intérieur de l'échelle en forme d'arc (8),
**caractérisé**
**en ce que** le champ en forme d'arc (19) est divisé en un premier segment (A) qui s'étend dudit premier angle ϕ₁ à un troisième angle variable ϕ et un second segment (B) qui s'étend dudit troisième angle variable ϕ jusqu'audit deuxième angle ϕ₂, où le troisième angle variable ϕ correspond à l'état fonctionnel associé du véhicule et où ϕ₁ ≤ ϕ < ϕ₂, où le premier segment (A) est agencé pour supposer un état qui peut être visuellement distingué de la seconde zone (B) et
**en ce que** des informations graphiques du dispositif (3 ; 4) sont agencées pour supposer un état modifié dans une zone autour de ϕ, par comparaison à la représentation normale.

2. Dispositif selon la revendication 1, **caractérisé en ce que** l'intensité de lumière dans le segment (A) varie en douceur ou en plusieurs incréments à partir d'une première valeur à l'angle ϕ₁ jusqu'à une seconde valeur à l'angle ϕ.

3. Dispositif selon la revendication 2, **caractérisé en ce que** l'intensité de lumière dans le segment (A) varie de la plus petite valeur à l'angle ϕ₁ à la plus grande valeur à l'angle ϕ.

4. Dispositif selon la revendication 3, **caractérisé en ce que** la résolution de l'affichage des valeurs numériques est supérieure dans la zone autour de l'angle ϕ.

5. Dispositif selon la revendication 3 ou 4, **caractérisé en ce que** l'échelle en forme d'arc (8) est agencée pour supposer un premier état (13) qui peut être visuellement distingué d'un second état (14), et **en ce que** ledit second état (14) est supposé par l'échelle dans la zone autour de ϕ.

6. Dispositif selon l'une quelconque des revendications 3 à 5, **caractérisé en ce que** chaque nombre (12 ; 15) représentant un état fonctionnel du véhicule (1) est agencé pour supposer un premier format normal (16) et un second format plus grand (17), ledit second format plus grand (17) étant supposé dans la zone autour de l'angle ϕ.

7. Dispositif selon l'une quelconque des revendications précédentes, **caractérisé en ce que** le segment (A) peut varier en termes de couleur et/ou d'intensité à différents états fonctionnels.

8. Dispositif selon l'une quelconque des revendications précédentes, **caractérisé en ce que** le dispositif est ovale ou elliptique.

9. Dispositif selon l'une quelconque des revendications précédentes, **caractérisé en ce que** ledit état fonctionnel est un ou plusieurs parmi les suivants : vitesse, vitesse de moteur, distance, temps, niveau de carburant, pression, tension ou courant du véhicule.
